(19) Europäisches Patentamt / European Patent Office / Office européen des brevets

(11) **EP 2 681 515 B1**

(12) **EUROPÄISCHE PATENTSCHRIFT**

(45) Veröffentlichungstag und Bekanntmachung des Hinweises auf die Patenterteilung:
**26.08.2015 Patentblatt 2015/35**

(51) Int Cl.:
*G01D 5/04* *(2006.01)*    *G01D 5/14* *(2006.01)*

(21) Anmeldenummer: **12710134.3**

(22) Anmeldetag: **02.03.2012**

(86) Internationale Anmeldenummer:
**PCT/EP2012/000928**

(87) Internationale Veröffentlichungsnummer:
**WO 2012/119732 (13.09.2012 Gazette 2012/37)**

(54) **MESSEINRICHTUNG ZUR ERFASSUNG DES ABSOLUTDREHWINKELS EINES ROTIERENDEN MESSOBJEKTS**

MEASURING DEVICE FOR DETECTING THE ABSOLUTE ROTATION ANGLE OF A ROTATING OBJECT

DISPOSITIF DE MESURE POUR DÉTECTER L'ANGLE DE ROTATION ABSOLU D'UN OBJET DE MESURE EN ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2011 DE 102011013133**

(43) Veröffentlichungstag der Anmeldung:
**08.01.2014 Patentblatt 2014/02**

(73) Patentinhaber: **AUMA Riester GmbH & Co. KG**
**79379 Müllheim (DE)**

(72) Erfinder:
• **PLATZER, Wilfried**
  **79100 Freiburg (DE)**
• **HOFMANN, Benjamin**
  **79423 Heitersheim (DE)**

(74) Vertreter: **Andres, Angelika Maria**
**Schwarzwaldblick 27**
**79418 Schliengen (DE)**

(56) Entgegenhaltungen:
EP-A1- 1 536 217     EP-A2- 2 253 939
DE-A1- 19 821 467    DE-A1-102006 006 359
DE-C1- 19 849 554

**Beschreibung**

Die Erfindung betrifft eine Messeinrichtung zur Erfassung des Absolutdrehwinkels eines rotierenden Messobjekts.

Aus der DE 198 21 467 A1 ist bereits ein ein-, zwei- oder mehrdimensionales Differenzgetriebe zur hochauflösenden Messung der Anzahl von ganzzahligen Umdrehungen einer Welle bekannt geworden. Im einfachsten Fall des eindimensionalen Differenzgetriebes werden nur zwei Zahnräder verwendet. Diese unterscheiden sich im Hinblick auf die Zähnezahl um einen Zahn. Eines der Zahnräder sitzt direkt auf der zu messenden Welle und treibt das zweite Zahnrad an. Anhand der Winkelstellung der beiden Zahnräder zueinander lässt sich die Anzahl der Umdrehungen der Welle bestimmen.

In der DE 198 21 467 A1 wird weiterhin ein zweidimensionales Differenzgetriebe mit drei Zahnrädern vorgestellt, wobei ein erstes Zahnrad wiederum der zu messenden Welle zugeordnet ist, während die beiden anderen Zahnräder von dem ersten Zahnrad direkt und/oder indirekt angetrieben werden. Über die Grundkombinationen, die sich für die unterschiedlichen Umdrehungszahlen der Zahnräder ergeben und die bei definierten Zähnezahlen der einzelnen Zahnräder möglich sind, wird die Anzahl der ganzzahligen Umdrehungen ermittelt. Um eine Eindeutigkeit im Hinblick auf die Anzahl der ganzzahligen Umdrehungen zu erzielen, werden für die verschiedenen Umdrehungszahlen die normierten Grundwerte der Grundkombinationen errechnet und in einem zweidimensionalen Zahlenfeld abgespeichert. Hierbei dienen die normierten Grundwerte als Speicherkoordinaten, anhand derer sich die ganzzahligen Umdrehungszahlen ermitteln lassen. Der Nachteil der bekannten Lösung ist darin zu sehen, dass die Auflösung im Bereich einer ganzzahligen Umdrehung liegt. Mit der bekannten Lösung ist es nicht möglich, darüber hinaus aktuell die exakte Winkelposition der Welle des Messobjekts zu bestimmen.

In Verbindung mit Stellantrieben ist bereits ein hochauflösendes Multiturn-Stirnradgetriebe zur Messung des Absolutdrehwinkels bekannt geworden. Bei dem bekannten Stirnradgetriebe kommen mehrere miteinander gekoppelte Getriebestufen zum Einsatz. Bei einer bevorzugten Lösung des Multiturn-Stirnradgetriebes werden 23 Zahnräder und fünf Positionsgebern eingesetzt. Die einzelnen Getriebestufen müssen mit hoher Präzision gefertigt werden, um die Lose in den einzelnen hintereinander angeordneten Getriebestufen zu minimieren.

Der Erfindung liegt die Aufgabe zugrunde, eine einfache und kostengünstige Messeinrichtung zur Erfassung des Absolutdrehwinkels eines rotierenden Messobjekts anzugeben.

Die Aufgabe wird dadurch gelöst, dass der Welle des Messobjekts ein erstes Zahnrad zugeordnet ist, wobei das erste Zahnrad direkt oder indirekt mit zumindest einem zweiten Zahnrad und einem dritten Zahnrad in Eingriff steht und wobei die Zähnezahl der einzelnen Zahnräder voneinander verschieden ist. Weiterhin ist jedem Zahnrad ein Drehwinkelgeber zugeordnet, der den Drehwinkel des zugeordneten Zahnrades erfasst, wobei eine Recheneinheit vorgesehen ist, die zumindest die Differenz der Drehwinkel des ersten Zahnrads und des zweiten Zahnrads und die Differenz der Drehwinkel des ersten Zahnrads und des dritten Zahnrads ermittelt und anhand einer Summenbildung der Differenzen der ermittelten Drehwinkel der Zahnräder die Anzahl der ganzzahligen Umdrehungen und den verbleibenden Drehwinkel der Welle des Messobjekts bestimmt. Weiterhin wird es als vorteilhaft angesehen, wenn eine Normierung auf die geometrische Steigung der Summenbildung der Differenzen der ermittelten Drehwinkel vorgenommen wird.

Die erfindungsgemäße Messeinrichtung erlaubt die Messung der genauen aktuellen Winkelposition einer Welle eines Messobjekts in Kombination mit der Auswertung der ganzzahligen Umdrehungszahl der Welle.

Der erfindungsgemäße differentielle Wegsensor weist bevorzugt drei miteinander gekoppelte Zahnräder auf, wobei die Zahnräder eine unterschiedliche Zähnezahl aufweisen. Die Zahnräder können als Stirnräder und/oder als innenverzahnte Zahnräder und/oder als Zahnriemen und/oder als Kettenräder und/oder als Reibräder ausgestaltet sein. Bei Reibrädern ist der Unterschied in der Zähnezahl nicht auf ganze positive Zahlen beschränkt. Hier kann der Unterschied in der Zähnezahl allgemein gesprochen einer beliebigen positiven reellen Zahl größer gleich 1 entsprechen.

Durch den erfindungsgemäßen differentiellen Wegsensor lassen sich die Probleme mit Losen in den Getriebestufen weitgehend eliminieren. Da die Anzahl der Getriebestufen bei der erfindungsgemäßen Messeinrichtung bezüglich der bekannten Lösung erheblich verringert ist, lässt sich die erfindungsgemäße Messeinrichtung kostengünstige und kompakt realisieren. Problemlos lässt sie sich darüber hinaus mit der Welle des rotierenden Messobjekts verbinden. Als besonders vorteilhaft wird es in Verbindung mit der erfindungsgemäßen Messeinrichtung angesehen, dass zum Abgleich und zur Funktionsprüfung der Messeinrichtung, z.B. in der Fertigung, eine einfache Umdrehung aller drei Zahnräder ausreichend ist. Somit lässt sich auch ein Funktionstest der Messeinrichtung schnell und ohne großen Aufwand durchführen.

Eine vorteilhafte Ausgestaltung der erfindungsgemäßen Messeinrichtung schlägt vor, dass zur Erfassung der Drehwinkel der einzelnen Zahnräder optische, magnetische und/oder elektromechanische Drehwinkelgeber eingesetzt werden. Bevorzugt kommen übrigens Hallsensoren zum Einsatz.

Wie bereits an vorhergehender Stelle beschrieben, wird über entsprechende Drehwinkelgeber von allen Zahnrädern jeweils der Drehwinkel in Grad erfasst. Die Differenz der Drehwinkel des zweiten Zahnrades zum ersten Zahnrad und vom dritten Zahnrad zum ersten Zahnrad werden zur Ermittlung der ganzzahligen Umdrehungen der Welle des Messobjekts genutzt, an der das erste Zahnrad befestigt ist. Bevorzugt unterscheidet sich übrigens die Zähnezahl der Zahnräder um einen Zahn, und zwar in der Weise, dass die Differenz der Zähnezahl des ersten Zahnrads und zweiten Zahnrads und des ersten Zahnrads und des dritten Zahnrads jeweils gleich 1 ist. Ist beispielsweise das erste Zahnrad der Welle des Messobjekts zugeordnet und beträgt seine Zähnezahl 25, so beträgt die Zähnezahl des zweiten Zahnrads 26 und die Zähnezahl des dritten Zahnrads 24.

Aufgrund des Unterschieds in der Zähnezahl des ersten Zahnrads zum zweiten Zahnrad und des ersten Zahnrads zum dritten Zahnrad, wobei der Unterschied gleich dZ und wobei dZ größer oder gleich 1 ist, wird die Gesamtwinkelauflösung der Messeinrichtung in n Hauptabschnitte unterteilt. Hierbei ist n größer oder gleich 1. Den dem entsprechenden Absolutwinkel zugeordneten Hauptabschnitt ermittelt die Recheneinheit anhand der relativen Positionen der Zahnräder.

Weiterhin ist im Zusammenhang mit der erfindungsgemäßen Messeinrichtung vorgesehen, dass die Recheneinheit die Multiturnauflösung TurnRes bei der Bestimmung des Absolutdrehwinkels unter Nutzung der Teilauflösung TA folgendermaßen ermittelt, wobei TA die Winkelauflösung eines Hauptabschnitts ist:

$$TA = \frac{1}{\left[\left(\frac{z_1^2}{z_2 \cdot z_3}\right) - 1\right] \cdot 2}$$

$$TurnRes = n \cdot TA$$

Hierbei ist $TurnRes \in N$ und $n \in N$, $TA \in Q$ und $TurnRes \geq TA$, wobei TurnRes die Multiturnauflösung bei kleinstmöglichem n ist.

Eine bevorzugte Ausgestaltung der erfindungsgemäßen Messeinrichtung sieht vor, dass der Winkelgeber des Zahnrads, das der Welle des Messobjekts zugeordnet ist, den verbleibenden Drehwinkel, sprich die Singleturn-Auflösung, direkt erfasst. Alternativ wird vorgeschlagen, dass die Recheneinheit den verbleibende Drehwinkel, sprich die Singleturn-Auflösung, anhand der Nachkommastellen bei der Berechung der ganzzahligen Umdrehungen bestimmt, wobei zur Normierung auf die Steigung von SumDiff bevorzugt folgende Gleichung verwendet wird:

$$Turn = SumDiff \cdot \frac{TA}{360°} + zHA \cdot TA$$

wobei $zHA \leq n$ ist und zHA der dem entsprechenden Absolutwinkel zugeordneten Hauptabschnitt HA ist. Der ganzzahlige Anteil von Turn ist die Anzahl der vollen Umdrehungen der Welle des Messobjekts, während die Nachkommastellen den verbleibenden Drehwinkel beschreiben. SumDiff ist die Summe der Differenzen der Drehwinkel $\varphi_{Z1}$, $\varphi_{Z2}$, $\varphi_{Z3}$ der einzelnen Zahnräder Z1, Z2, Z3 und wird nach folgender Formel berechnet:

$$SumDiff = 2 \cdot \varphi_{Z1} - \varphi_{Z2} - \varphi_{Z3}.$$

Um bei der Drehwinkelerfassung entstehende Ungenauigkeiten und Lose im Getriebe der Messeinrichtung zu kompensieren, schlägt eine vorteilhafte Ausgestaltung der erfindungsgemäßen Messeinrichtung Folgendes vor: Die Recheneinheit unterteilt durch die Differenzbildung der ermittelten Drehwinkel des zweiten Zahnrades und des dritten Zahnrades die Winkelauflösung der Messeinrichtung in Unterabschnitte UA. Hierbei hängt die Anzahl der Unterabschnitte von der Zähnezahl des ersten Zahnrades ab. Insbesondere ist die geometrische Steigung der Unterabschnitte UA größer ist als die geometrische Steigung des Hauptabschnitts HA bzw. der Hauptabschnitte zHA.

Bevorzugt kommt die erfindungsgemäße Messeinrichtung zum Einsatz bei einem Stellglied bzw. einem Aktor in der Automatisierungs- oder Fertigungstechnik. Es versteht sich jedoch, dass die erfindungsgemäße Messeinrichtung keineswegs auf diese Anwendung beschränkt ist. Die erfindungsgemäße Messeinrichtung kann beispielsweise auch bei Druckmaschinen oder Automobilen zum Einsatz kommen.

Beim Einsatz der erfindungsgemäßen Messeinrichtung bei einem Stellglied bzw. einem Aktor handelt es sich bei dem Messobjekt bevorzugt um die Antriebswelle und/oder die Abtriebswelle eines Stellantriebs, der zur Betätigung einer Armatur dient. Die Antriebswelle ist darüber hinaus mit einem Betätigungselement verbunden. Bei dem Betätigungselement handelt es sich um einen Elektromotor und/oder ein Stellrad bzw. Handrad. Die Armatur ist mit der Abtriebswelle gekoppelt. Zwecks Untersetzung der hohen Drehzahl des Elektromotors in die relativ niedrige Drehzahl der Armatur ist bei vielen Anwendungen üblicherweise zwischen dem Betätigungselement und der Armatur ein Untersetzungsgetriebe angeordnet.

Die Erfindung wird anhand der nachfolgenden Figuren näher erläutert. Es zeigt:

Fig. 1: eine schematische Darstellung eines Stellgliedes bzw. eines Aktors,

Fig. 2: eine schematische Darstellung einer Ausgestaltung der erfindungsgemäßen Messeinrichtung,

Fig. 3: ein erstes Diagramm, das die Multiturn-Auflösung verdeutlicht, wenn ein Hauptabschnitt vorliegt, und

Fig. 4: ein zweites Diagramm, das die Multiturn-Auflösung bei zwei Hauptabschnitten verdeutlicht.

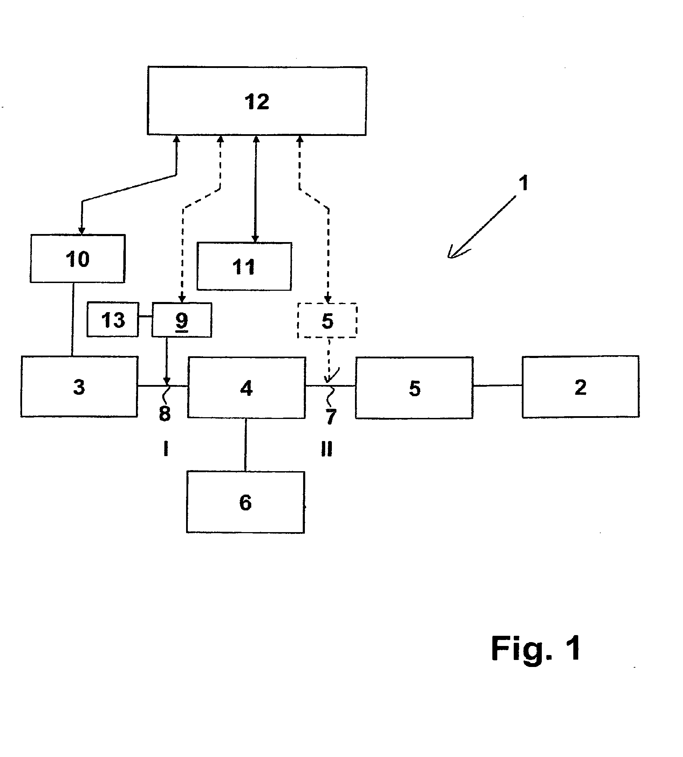

Fig. 1 zeigt eine schematische Darstellung eines Stellgliedes 1 bzw. eines Aktors 1 zur Betätigung einer Armatur 2. Bei der Armatur 2 handelt es sich beispielsweise um ein Ventil, einen Schieber, eine Drossel oder eine Klappe. Das Stellglied 1 bzw. der Aktor 1 setzt sich üblicherweise zusammen aus einem Elektromotor 3 mit entsprechender Sensorik 10, einem Stellantrieb 4 mit entsprechender Sensorik 11, einem Untersetzungsgetriebe 5 und einer Armatur 2. Die Steuerung des Stellgliedes 1 erfolgt mittels der übergeordneten Steuereinheit 12. Die Steuereinheit 12 kann in den Stellantrieb 4 integriert sein, sie kann an den Stellantrieb 4 angebaut oder als separate Komponente ausgestaltet sein. Die in der Prozess- und Verfahrenstechnik verwendeten Stellantriebe 4 für Armaturen 2 sind dahingehend ausgelegt, dass sie bei niedrigen Drehzahlen (4 - 180 U/min) hohe Drehmomente (30 - 630.000 Nm) übertragen können, wobei das übertragene Drehmoment auch bei geringen Drehwinkeln eine hohe Konstanz aufweisen muss.

Die Drehmomentübertragung zwischen dem Elektromotor 3 und der Armatur 2 erfolgt über das Untersetzungsgetriebe 5. Das Untersetzungsgetriebe 5 ist notwendig, um die hohe Drehzahl des Elektromotors 3 in die gewünschte in hohem Maße konstante Abtriebsdrehzahl zur Betätigung der Armatur 2 umzusetzen. Als Untersetzungsgetriebe 5 können unterschiedliche Getriebe eingesetzt werden. Beispielhaft seien ein Kegelrad- oder Stirnradgetriebe, ein Schneckengetriebe, ein Überlagerungsgetriebe oder ein Hebelgetriebe genannt. Der Drehmomentbereich bei Drehantrieben reicht bis zu einem Drehmoment von 32.000 Nm; bei Schwenkantrieben lassen sich Drehmomente bis zu 630.000 Nm realisieren.

Um einen in der Prozess- oder Verfahrensautomatisierung vorgegebenen Sicherheitsstandard zu erfüllen, muss der Stellantrieb im Notfall über ein separat betätigbares Stellrad 6 betrieben werden können. Dieses Stellrad 6 kommt darüber hinaus auch bei der Inbetriebnahme bzw. bei der Wieder-Inbetriebnahme des Stellantriebs 4 nach einem Fehlerfall zum Einsatz. Bei dem Stellrad 6 handelt es sich üblicherweise um ein Handrad, das manuell vom Bedienpersonal betätigt wird, wodurch die Armatur 2 in eine gewünschte Position gebracht werden kann.

Zwecks Trennung von Handbetrieb und Motorbetrieb ist ein in der Fig. 1 nicht gesondert dargestellter Kupplungsmechanismus vorgesehen. Der Kupplungsmechanismus ist üblicherweise so ausgestaltet und/oder angeordnet, dass im Motorbetrieb der Elektromotor 3 mit der Abtriebswelle 7 direkt gekuppelt und das Stellrad 6 ausgekuppelt ist, während im Handbetrieb die Abtriebswelle 7 mit dem Stellrad 6 gekuppelt und der Elektromotor 3 ausgekuppelt ist. Hierdurch ist eine Trennung zwischen Motorbetrieb und Handbetrieb möglich. Insbesondere ist der Kupplungsmechanismus derart ausgestaltet, dass das Stellrad 6 automatisch von der Antriebswelle 8 ausgekuppelt wird, sobald der Stellantrieb 4 im Motorbetrieb arbeitet - der Motorbetrieb hat also Vorrang vor dem Handbetrieb. Entsprechende Stellantriebe 4 werden von der Anmelderin angeboten und vertrieben.

Die Erfassung des Drehwinkels $\varphi_{Z1}$ der Antriebswelle 8 oder der Abtriebswelle 7 erfolgt über die erfindungsgemäße Messeinrichtung 1, die in den nachfolgenden Figuren noch näher beschrieben wird. Mit den Kennzeichnungen I und II sind in Fig. 1 unterschiedliche Positionen markiert, an denen die erfindungsgemäße Messeinrichtung 1 in dem Stellglied 1 montiert werden kann. Während die Positionierung der Messeinrichtung 1 gemäß Position I bevorzugt in Verbindung mit der Nutzung eines Schwenkantriebs zum Einsatz kommt, kommt die Positionierung der Messeinrichtung 1 gemäß Position II bevorzugt in Verbindung mit der Nutzung eines Drehantriebs zum Einsatz.

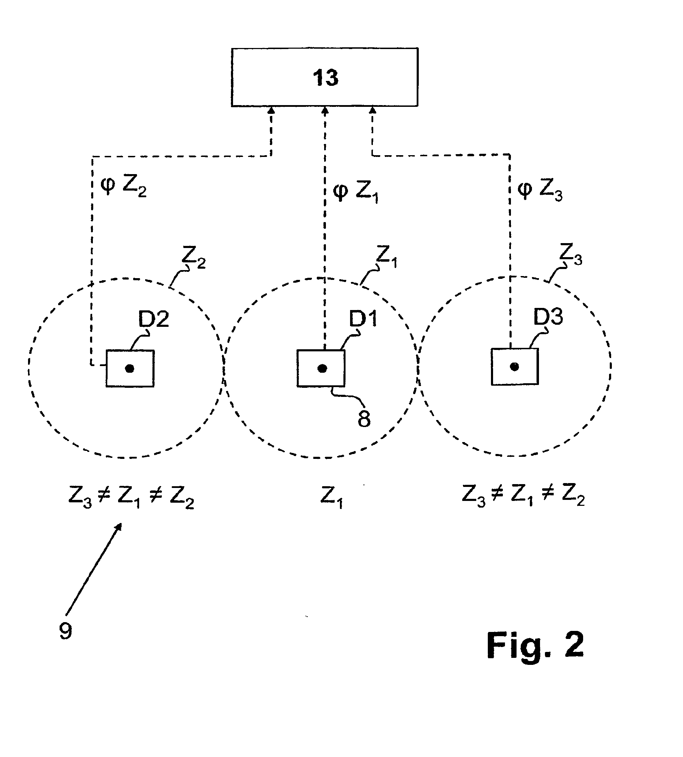

Fig. 2 zeigt eine schematische Darstellung einer Ausgestaltung der erfindungsgemäßen Messeinrichtung, bestehend aus drei miteinander gekoppelten Zahnrädern Z1, Z2, Z3, wobei das Zahnrad Z1 die Zähnezahl $z1$ aufweist, wobei das Zahnrad Z2 die Zähnezahl $z2$ hat und wobei das Zahnrad Z3 die Zähnezahl $z3$ aufweist. Die Zähnezahlen $z1$, $z2$, $z3$ der Zahnräder Z1, Z2, Z3 sind voneinander verschieden. Insbesondere beträgt der Unterschied in den Zähnezahlen zwischen dem Zahnrad Z1 und dem Zahnrad Z2 bzw. dem Zahnrad Z1 und dem Zahnrad Z3 jeweils einen Zahn. Im gezeigten Fall ist das Zahnrad Z1 der Welle 8, 9 des rotierenden Messobjekts zugeordnet. Die Zahnräder Z2, Z3 stehen in direktem Eingriff mit dem Zahnrad Z1.

Jedem Zahnrad Z1, Z2, Z3 ist ein Drehwinkelgeber D1, D2, D3 zugeordnet, der den Drehwinkel $\varphi_{Z1}$, $\varphi_{Z2}$, $\varphi_{Z3}$ des zugeordneten Zahnrades Z1, Z2, Z3 erfasst. Der Drehwinkel $\varphi_{Z1}$, $\varphi_{Z2}$, $\varphi_{Z3}$ der einzelnen Zahnräder Z1, Z2, Z3 wird über optische, magnetische und/oder elektromechanische Drehwinkelgeber D1, D2, D3 erfasst.

Weiterhin ist eine Recheneinheit 13 vorgesehen ist, die zumindest die Differenz $\varphi_{Z1} - \varphi_{Z2}$ der Drehwinkel des zweiten Zahnrades Z2 zu dem ersten Zahnrad Z1 und die Differenz $\varphi_{Z1} - \varphi_{Z3}$ der Drehwinkel des dritten Zahnrads Z3 zu dem ersten Zahnrad Z1 ermittelt und anhand einer Summenbildung SumDiff = $(\varphi_{Z1} - \varphi_{Z2})$ + $(\varphi_{Z1} - \varphi_{Z3})$ der Differenzen $\varphi_{Z1} - \varphi_{Z2}$, $\varphi_{Z1} - \varphi_{Z3}$ der ermittelten Drehwinkel $\varphi_{Z1}$, $\varphi_{Z2}$, $\varphi_{Z3}$ der Zahnräder Z1, Z2, Z3 die Anzahl der ganzzahligen Umdrehungen und den verbleibenden Drehwinkel $\varphi_{Z1}$ der Welle des Messobjekts bestimmt.

Die Recheneinheit 13 ermittelt die Multiturnauflösung bei der Bestimmung des Absolutdrehwinkels $\varphi_{Z1}$ der Welle des rotierenden Messobjekts unter Nutzung der Teilauflösung TA bevorzugt über die folgende Gleichung:

$$TA = \cfrac{1}{\left[\left(\cfrac{z_1^2}{z_2 \cdot z_3}\right) - 1\right] \cdot 2}$$

$$TurnRes = n \cdot TA$$

Der Winkelgeber D1 des Zahnrads Z1, das der Welle 8 des Messobjekts zugeordnet ist, erfasst den verbleibenden Drehwinkel $\varphi_{Z1}$ bevorzugt direkt. Alternativ bestimmt die Recheneinheit 13 den verbleibende Drehwinkel $\varphi_{Z1}$ anhand der Nachkommastellen bei der Berechung der ganzzahligen Umdrehungen, wobei bevorzugt folgende Gleichung verwendet wird:

$$Turn = SumDiff \cdot \frac{TA}{360°} + zHA \cdot TA$$

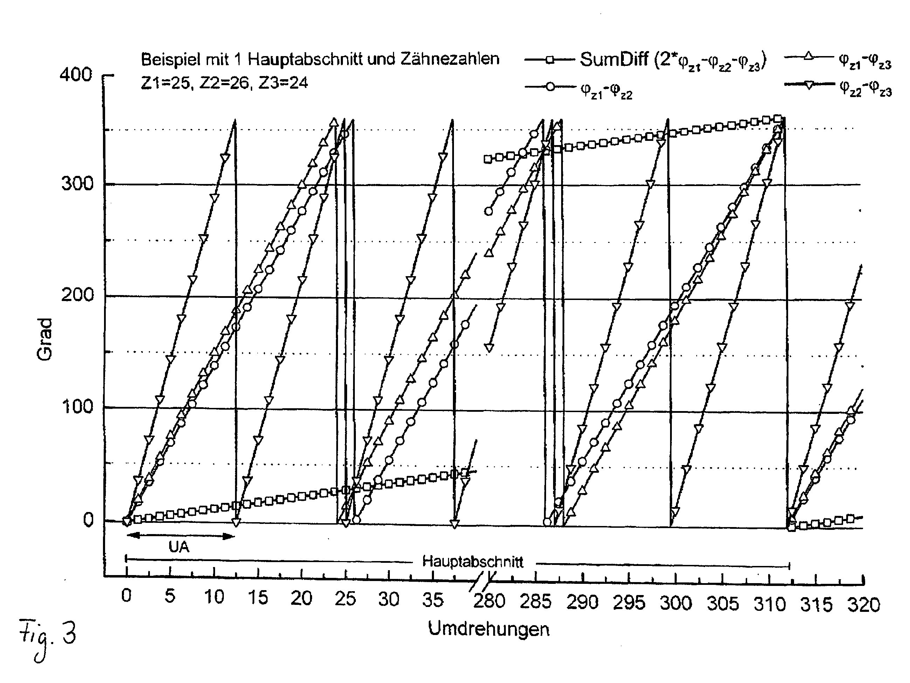

Fig. 3 zeigt ein Diagramm, das die Multiturnauflösung TumRes mit einem Hauptabschnitt HA, also mit n=1, verdeutlicht. Auf der x-Achse ist die Anzahl der ganzzahligen Umdrehungen aufgetragen; auf der y-Achse sind verschiedene Differenzen der Drehwinkel der einzelnen Zahnräder in Grad aufgetragen. Im gezeigten Fall werden in einem Hauptabschnitt 312 ganzzahlige Umdrehungen durchgeführt. Eindeutig ermitteln lassen sich die ganzzahligen Umdrehungen anhand der Summe SumDiff der Differenzen der Drehwinkel $\varphi_{Z1}$, $\varphi_{Z2}$, $\varphi_{Z3}$ der Zahnräder Z1, Z2, Z3.

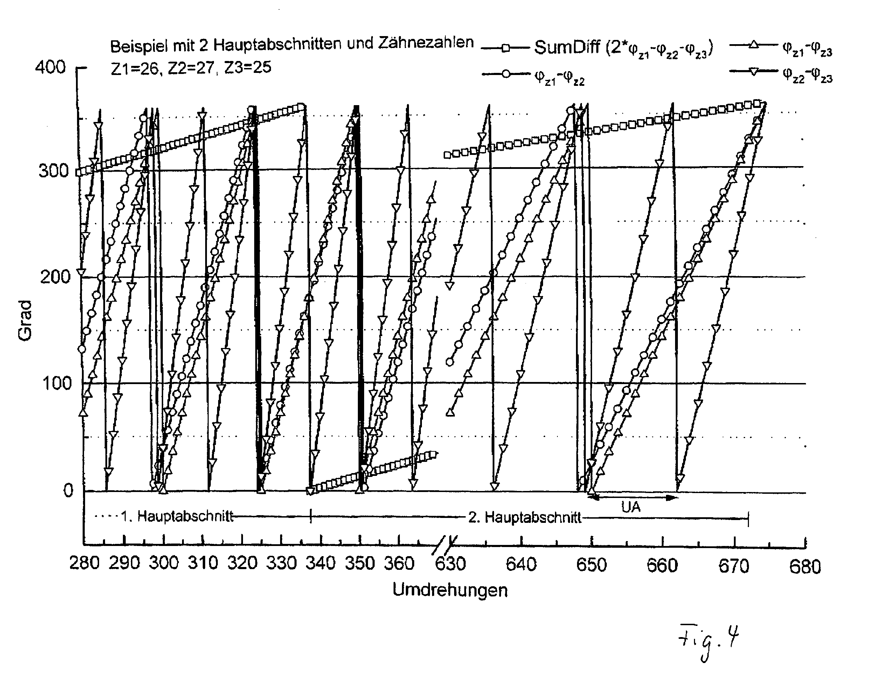

Weiterhin dargestellt sind in Fig. 3, wie auch in Fig. 4, die Winkeldifferenzen $\varphi_{Z1}$ - $\varphi_{Z2}$, $\varphi_{Z2}$ - $\varphi_{Z3}$, $\varphi_{Z1}$ - $\varphi_{Z3}$ der ermittelten Drehwinkel $\varphi_{Z1}$, $\varphi_{Z2}$, $\varphi_{Z3}$ des ersten Zahnrades Z1, des zweiten Zahnrades Z2 und des dritten Zahnrades Z3. Die entsprechenden Kurven haben unterschiedliche geometrische Steigungen, wodurch die Multiturnauflösung TurnRes der Messeinrichtung 9 in Unterabschnitte UA unterteilt wird. Der erste Unterabschnitt der Kurve $\varphi_{Z2}$ - $\varphi_{Z3}$ ist in der Fig. 3 beispielhaft eingezeichnet. Die Anzahl der Unterabschnitte UA der Kurve $\varphi_{Z2}$ - $\varphi_{Z3}$ ist von der Zähnezahl z1 des ersten Zahnrades Z1 abhängig. Da die Zähnezahl z1 des ersten Zahnrades Z1 25 beträgt, gibt es im dargestellten Fall 25 folglich 25 Unterabschnitte UA der Kurve $\varphi_{Z2}$ - $\varphi_{Z3}$. Die Zähnezahl z1, z2, z3 der Zahnräder Z1, Z2, Z3 ist so gewählt, dass die geometrische Steigung der Unterabschnitte $U_{Ai}$ mit i = 1, ...n eine höhere geometrische Steigung aufweist als die geometrische Steigung der Hauptabschnitte HA bzw. des Hauptabschnitts HA. Anhand der Kurven, die die Differenzen der Drehwinkel $\varphi_{Z2}$ - $\varphi_{Z3}$ bzw. $\varphi_{Z1}$ - $\varphi_{Z2}$ bzw. $\varphi_{Z1}$ - $\varphi_{Z3}$ des ersten, des zweiten und des dritten Zahnrades Z1, Z2, Z3 wiedergeben, lässt sich die Auflösung präziser ermitteln und der verbleibende Drehwinkel $\varphi_{Z1}$ der Welle 8 des Messobjekts bestimmen.

Fig. 4 zeigt ein Diagramm, das die Multiturnauflösung TurnRes mit zwei Hauptabschnitten HA verdeutlicht. Hierbei unterteilt die Recheneinheit 13 aufgrund des Unterschieds in der Zähnezahl vom ersten Zahnrad Z1 zum zweiten Zahnrad Z2 und vom ersten Zahnrad Z1 zum dritten Zahnrad Z3, wobei der Unterschied gleich dZ ist, wobei dZ größer oder gleich 1 ist, die Gesamtwinkelauflösung der Messeinrichtung 9 in n Hauptabschnitte HA. Darüber hinaus ermittelt die Recheneinheit 13 den zugehörigen Hauptabschnitt zHA anhand der jeweiligen Positionen $\varphi_{Z1}$, $\varphi_{Z2}$, $\varphi_{Z3}$ der Zahnräder Z1, Z2, Z3.

**Bezugszeichenliste**

| | |
|---|---|
| 1 | Stellglied / Aktor |
| 2 | Armatur |
| 3 | Elektromotor |
| 4 | Stellantrieb |
| 5 | Untersetzungsgetriebe |
| 6 | Stellrad / Handrad |
| 7 | Abtriebswelle |
| 8 | Antriebswelle |
| 9 | Messeinrichtung zur Bestimmung des Absolutdrehwinkels |
| 10 | Sensorik Elektromotor |
| 11 | Sensorik Stellantrieb |
| 12 | übergeordnete Steuerung |
| 13 | Recheneinheit |
| dZ | Unterschied in der Zähnezahl des ersten Zahnrades zum zweiten Zahnrades und des ersten Zahnrades zum dritten Zahnrad |
| $\varphi_{Z1}$ | Zähnezahl des Zahnrads Z1 |
| $\varphi_{Z2}$ | Zähnezahl des Zahnrads Z2 |
| $\varphi_{Z3}$ | Zähnezahl des Zahnrads Z3 |
| z1 | Zähnezahl des Zahnrads Z1 |
| z2 | Zähnezahl des Zahnrads Z2 |
| z3 | Zähnezahl des Zahnrads Z3 |
| Z1 | erstes Zahnrad |
| Z2 | zweites Zahnrad |
| Z3 | drittes Zahnrad |
| D1 | Winkelgeber des ersten Zahnrades |
| D2 | Winkelgeber des zweiten Zahnrades |
| D3 | Winkelgeber des dritten Zahnrades |
| HA | Hauptabschnitt |
| n | Anzahl der Hauptabschnitte |
| zHA | dem Absolutwinkel zugeordneter Hauptabschnitt |
| UA | Unterabschnitt |
| nUA | Anzahl der Unterabschnitte |
| SumDiff | Summe der Differenzen der Drehwinkel der Zahnräder |
| TA | Winkelauflösung der Hauptabschnitte HA |
| TurnRes | Multiturnauflösung |
| Turn | der ganzzahlige Anteil von Turn entspricht der Anzahl der vollen Umdrehungen der Welle des Messobjekts, die Nachkommas- |

tellen beschreiben den verbleibenden Drehwinkel

## Patentansprüche

1. Messeinrichtung (9) zur Erfassung des Absolutdrehwinkels (cp) eines rotierenden Messobjekts, wobei der Welle (8) des Messobjekts ein erstes Zahnrad (Z1) zugeordnet ist, wobei das erste Zahnrad (Z1) direkt oder indirekt mit zumindest einem zweiten Zahnrad (Z2) und einem dritten Zahnrad (Z3) in Eingriff steht und wobei die Zähnezahl (z1, z2, z3) der einzelnen Zahnräder (Z1, Z2, Z3) voneinander verschieden ist, wobei jedem Zahnrad (Z1, Z2, Z3) ein Drehwinkelgeber (D1, D2, D3) zugeordnet ist, der den Drehwinkel ($\varphi_{Z1}$, $\varphi_{Z2}$, $\varphi_{Z3}$) des zugeordneten Zahnrades (Z1, Z2, Z3) erfasst, wobei eine Recheneinheit vorgesehen ist, die zumindest die Differenz ($\varphi_{Z1}$ - $\varphi_{Z2}$) der Drehwinkel des zweiten Zahnrades (Z2) zu dem ersten Zahnrad (Z1) und die Differenz ($\varphi_{Z1}$ - $\varphi_{Z3}$) der Drehwinkel des dritten Zahnrads (Z3) zu dem ersten Zahnrad (Z1) ermittelt und anhand einer Summenbildung (SumDiff = ($\varphi_{Z1}$ - $\varphi_{Z2}$) + ($\varphi_{Z1}$ - $\varphi_{Z3}$)) der Differenzen ($\varphi_{Z1}$ - $\varphi_{Z2}$, ($\varphi_{Z1}$ - $\varphi_{Z3}$) der ermittelten Drehwinkel ($\varphi_{Z1}$, $\varphi_{Z2}$, $\varphi_{Z3}$) der Zahnräder (Z1, Z2, Z3) die Anzahl der ganzzahligen Umdrehungen und den verbleibenden Drehwinkel ($\varphi_{Z1}$) der Welle (8) des Messobjekts bestimmt.

2. Messeinrichtung nach Anspruch 1, wobei zur Erfassung der Drehwinkel ($\varphi_{Z1}$, $\varphi_{Z2}$, $\varphi_{Z3}$) der einzelnen Zahnräder (Z1, Z2, Z3) optische, magnetische und/oder elektromechanische Drehwinkelgeber (D1, D2, D3) verwendbar sind.

3. Messeinrichtung nach Anspruch 1 oder 2, wobei die Zähnezahl (z1, z2, z3) der Zahnräder (Z1, Z2, Z3) sich bevorzugt um einen Zahn (dZ = 1) unterscheidet, so dass die Differenz (dZ) der Zähnezahl (z1 - z2 bzw. z1 - z3) jeweils gleich 1 ist.

4. Messeinrichtung nach einem oder mehreren der vorhergehenden Ansprüche, wobei die Recheneinheit (13) die Multiturnauflösung (TurnRes) zur Bestimmung des Absolutdrehwinkels unter Nutzung der Teilauflösung (TA) folgendermaßen ermittelt:

$$TA = \frac{1}{\left[\left(\frac{z_1^2}{z_2 \cdot z_3}\right) - 1\right] \cdot 2}$$

$$TurnRes = n \cdot TA$$

mit TurnRes, $n \in N$, $TA \in Q$ und TurnRes $\geq$ TA, wobei TurnRes die Multiturnauflösung bei kleinst möglichem n ist.

5. Messeinrichtung nach Anspruch 1, 2 oder 3, wobei der Winkelgeber (D1), des Zahnrads (Z1, Z2, Z3), das der Welle (8) des Messobjekts zugeordnet ist, den verbleibenden Drehwinkel ($\varphi_{Z1}$) direkt erfasst oder wobei die Recheneinheit (13) den verbleibende Drehwinkel ($\varphi_{Z1}$) anhand der Nachkommastellen bei der Berechung der ganzzahligen Umdrehungen (Multiturn) bestimmt, wobei bevorzugt folgende Gleichung verwendet wird:

$$Turn = SumDiff \cdot \frac{TA}{360°} + zHA \cdot TA$$

wobei zHA $\leq$ n ist und wobei SumDiff die Summe der Differenzen der Drehwinkel $\varphi_{Z1}$, $\varphi_{Z2}$, $\varphi_{Z3}$ der einzelnen Zahnräder Z1, Z2, Z3 wiedergibt

$$SumDiff = 2 \cdot \varphi_{Z1} - \varphi_{Z2} - \varphi_{Z3} \cdot$$

6. Messeinrichtung nach einem oder mehreren der vorhergehenden Ansprüche, wobei die Recheneinheit (13) durch die Differenzbildung der ermittelten Drehwinkel ($\varphi_{Z1}$, $\varphi_{Z2}$, $\varphi_{Z3}$) des zweiten Zahnrades (Z2) und des dritten Zahnrades (Z3) die Winkelauflösung (TurnRes) der Messeinrichtung (9) in Unterabschnitte (UA) unterteilt, wobei die Anzahl der Unterabschnitte (UA) von der Zähnezahl (z1) des ersten Zahnrades (Z1) abhängig ist, und die geometrische Steigung der Unterabschnitte ($UA_i$ mit i = 1, ...n) größer ist als die geometrische der Hauptabschnitte (HA).

7. Messeinrichtung nach einem oder mehreren der vorhergehenden Ansprüche, wobei die Recheneinheit (13) durch die Differenzbildung ($\varphi_{Z1}$ - $\varphi_{Z2}$, $\varphi_{Z1}$, - $\varphi_{Z3}$) der ermittelten Drehwinkel des ersten Zahnrades (Z1) und des zweiten Zahnrades (Z2) bzw. des ersten Zahnrades (Z1) und des dritten Zahnrades (Z3) die Winkelauflösung (TurnRes) der Messeinrichtung (1) in Unterabschnitte (UA) unterteilt, wobei die geometrische Steigung der Unterabschnitte (UA) größer ist als die geometrische Steigung der Hauptabschnitte (HA).

8. Messvorrichtung nach einem oder mehreren der vorhergehenden Ansprüche,

wobei die Recheneinheit (13) aufgrund des Unterschieds (dZ) in der Zähnezahl vom ersten Zahnrad (Z1) zum zweiten Zahnrad (Z2) und vom ersten Zahnrad (Z1) zum dritten Zahnrad (Z3), wobei der Unterschied gleich dZ ist, wobei dZ größer oder gleich 1 ist, die Gesamtwinkelauflösung der Messeinrichtung (9) in n Hauptabschnitte (HA) unterteilt und wobei die Recheneinheit (13) den zugehörigen Hauptabschnitt (HAn) anhand der jeweiligen Position ($\varphi_{Z1}$, $\varphi_{Z2}$, $\varphi_{Z3}$) der Zahnräder (Z1, Z2, Z3) ermittelt.

9. Messeinrichtung nach einem oder mehreren der Ansprüche 1-4,

wobei es sich bei dem Messobjekt um eine Antriebswelle (8) und/oder die Abtriebswelle (7) eines Stellantriebs (4) zur Betätigung einer Armatur (2) handelt, wobei die Antriebswelle (8) mit einem Betätigungselement (3; 6) verbunden ist, wobei die Armatur (2) mit der Abtriebswelle (7) verbunden ist und wobei zwischen dem Betätigungselement (3; 6) und der Armatur (2) ein Untersetzungsgetriebe (5) vorgesehen ist.

10. Messeinrichtung nach Anspruch 9,

wobei es sich bei dem Betätigungselement um einen Elektromotor (3) oder ein Stellrad (6) handelt.

11. Messeinrichtung nach einem oder mehreren der vorhergehenden Ansprüche,

wobei die Zahnräder (Z1, Z2, Z3) als Stirnräder und/oder als innenverzahnte Zahnräder und/oder als Zahnriemen und/oder als Kettenräder und/oder als Reibräder ausgestaltet sind.

**Claims**

1. Measuring system (9) for registering the absolute rotation angle ($\varphi$) of a rotating, measured object, wherein a first gear (Z1) is associated with the shaft (8) of the measured object, wherein the first gear (Z1) directly or indirectly engages at least a second gear (Z2) and a third gear (Z3) and wherein tooth counts (z1, z2, z3) of the individual gears (Z1, Z2, Z3) differ from one another, wherein there is associated with each gear (Z1, Z2, Z3) a rotation angle sensor (D1, D2, D3), which registers the rotation angle ($\varphi_{Z1}$, $\varphi_{Z2}$, $\varphi_{Z3}$) of the associated gear (Z1, Z2, Z3), wherein a calculating unit is provided, which ascertains at least the difference ($\varphi_{Z1}$ - $\varphi_{Z2}$) between the rotation angle of the second gear (Z2) and that of the first gear (Z1) and the difference ($\varphi_{Z1}$ - $\varphi_{Z3}$) between the rotation angle of the third gear (Z3) and that of the first gear (Z1) and, based on a summing (SumDiff = ($\varphi_{Z1}$ - $\varphi_{Z2}$) + ($\varphi_{Z1}$ - $\varphi_{Z3}$)) of the differences ($\varphi_{Z1}$ - $\varphi_{Z2}$, $\varphi_{Z1}$ - $\varphi_{Z3}$) of the ascertained rotation angles ($\varphi_{Z1}$, $\varphi_{Z2}$, $\varphi_{Z3}$) the gears (Z1, Z2, Z3), determines the number of whole numbered revolutions and the remainder rotation angle ($\varphi_{Z1}$) of the shaft (8) of the measured object.

2. Measuring system as claimed in claim 1, wherein optical, magnetic and/or electromechanical rotation angle sensors (D1, D2, D3) are applied for registering the rotation angles ($\varphi_{Z1}$, $\varphi_{Z2}$, $\varphi_{Z3}$) of the individual gears (Z1, Z2, Z3).

3. Measuring system as claimed in claim 1 or 2, wherein the tooth counts (z1, z2, z3) of the gears (Z1, Z2, Z3) differ preferably by one tooth (dZ = 1), so that the difference (dZ) of tooth counts (z1 - z2, or z1 - z3), in each case, equals 1.

4. Measuring system as claimed in one or more of the preceding claims,

wherein the calculating unit (13) ascertains the multi-turn resolution (TurnRes) for determining the absolute rotation angle using the subresolution (SR) in the following way:

$$TA = \dfrac{1}{\left[\left(\dfrac{z_1^2}{z_2 \cdot z_3}\right) - 1\right] \cdot 2}$$

$$TurnRes = n \cdot TA$$

with TurnRes, $n \in N$, $TA \in Q$ and $TurnRes \geq TA$, wherein TurnRes is the multi-turn resolution in the case of smallest possible n.

5. Measuring system as claimed in claim 1, 2 or 3, wherein the angle sensor (D1) of the gear (Z1, Z2, Z3) associated with the shaft (8) of the measured object registers the remainder rotation angle ($\varphi_{Z1}$) directly or the calculating unit (13) determines the remainder rotation angle ($\varphi_{Z1}$) based on the decimal fraction portion in the case of calculating the whole numbered revolutions (multi-turn), wherein preferably the following equation is used:

$$Turn = SumDiff \cdot \dfrac{TA}{360°} + zHA \cdot TA$$

wherein $zHA \leq n$ and SumDiff is the sum of the differences of the rotation angles $\varphi_{Z1}$, $\varphi_{Z2}$, $\varphi_{Z3}$ of the individual gears Z1, Z2, Z3, i.e.

$$\text{SumDiff} = 2 \cdot \varphi_{Z1} - \varphi_{Z2} - \varphi_{Z3}.$$

**6.** Measuring system as claimed in one or more of the preceding claims, wherein the calculating unit (13) divides by the difference forming of the ascertained rotation angles ($\varphi_{Z1}$, $\varphi_{Z2}$, $\varphi_{Z3}$) of the second gear (Z2) and third gear (Z3) the angular resolution (TurnRes) of the measuring system (9) into subsections (UA), wherein the number of subsections (UA) depends on the tooth count (z1) of the first gear (Z1), and the slope of the subsections ($UA_i$ with i = 1, ...n) is greater than the slope of the main section (HA).

**7.** Measuring system as claimed in one or more of the preceding claims,
wherein the calculating unit (13) divides by difference forming ($\varphi_{Z1} - \varphi_{Z2}$, $\varphi_{Z1} - \varphi_{Z3}$) of the ascertained rotation angle of the first gear (Z1) and that of the second gear (Z2), respectively of the first gear (Z1) and that of the third gear (Z3) the angular resolution (TurnRes) of the measuring system (1) into subsections (UA), wherein the slope of the subsections (UA) is greater than the slope of the main section (HA).

**8.** Measuring apparatus as claimed in one or more of the preceding claims, wherein the calculating unit (13), due to the difference (dZ) in tooth count of the first gear (Z1) relative to the second gear (Z2) and of the first gear (Z1) relative to the third gear (Z3), wherein the difference equals dZ, wherein dZ is greater than or equal to 1, divides the total angle resolution of the measuring system (9) into n main section (HA) and wherein the calculating unit (13) ascertains the associated main section (HAn) based on the respective positions ($\varphi_{Z1}$, $\varphi_{Z2}$, $\varphi_{Z3}$) of the gears (Z1, Z2, Z3).

**9.** Measuring system as claimed in one or more of claims 1-4,
wherein the measured object is a drive shaft (8) and/or the output shaft (7) of an actuator drive (4) for actuating a flow control mechanism (2), wherein the drive shaft (8) is connected with an actuating element (3; 6), wherein the flow control mechanism (2) is connected with the output shaft (7) and wherein a speed reduction transmission (5) is provided between the actuating element (3; 6) and the flow control mechanism (2).

**10.** Measuring system as claimed in claim 9,
wherein the actuating element is an electric motor (3) or an adjusting wheel (6).

**11.** Measuring system as claimed in one or more of the preceding claims,
wherein the gears (Z1, Z2, Z3) are embodied as spur gears and/or as internally toothed gears and/or as toothed belts and/or as sprockets and/or as friction gears.

## Revendications

**1.** Dispositif de mesure (9) destiné à la détection de l'angle de rotation absolu ($\varphi$) d'un objet de mesure en rotation, pour lequel un premier engrenage (Z1) est attribué à l'arbre (8) de l'objet de mesure, le premier engrenage (Z1) étant en prise directe ou indirecte avec au moins un deuxième engrenage (Z2) et un troisième engrenage (Z3), et pour lequel les nombres de dents (z1, z2, z3) des différents engrenages (Z1, Z2, Z3) sont différents les uns des autres, pour lequel est attribué à chaque engrenage (Z1, Z2, Z3) un codeur angulaire (D1, D2, D3), qui mesure l'angle de rotation ($\varphi_{z1}$, $\varphi_{z2}$, $\varphi_{z3}$) de l'engrenage (Z1, Z2, Z3) correspondant, pour lequel est prévu une unité de calcul, qui détermine au minimum la différence ($\varphi_{z1} - \varphi_{z2}$) des angles de rotation du deuxième engrenage (Z2) par rapport au premier engrenage (Z1) et la différence ($\varphi_{z1} - \varphi_{z3}$) des angles de rotation du troisième engrenage (Z3) par rapport au premier engrenage (Z1) et détermine, au moyen d'une somme (SumDiff = ($\varphi_{z1} - \varphi_{z2}$) + ($\varphi_{z1} - \varphi_{z3}$)) des différences ($\varphi_{z1} - \varphi_{z2}$, $\varphi_{z1} - \varphi_{z3}$) des angles de rotation ($\varphi_{z1}$, $\varphi_{z2}$, $\varphi_{z3}$) déterminés des engrenages (Z1, Z2, Z3), le nombre de tours entiers et l'angle de rotation ($\varphi_{z1}$) restant de l'arbre (8) de l'objet de mesure.

**2.** Dispositif de mesure selon la revendication 1, pour lequel peuvent être utilisés, pour la détermination des angles de rotation ($\varphi_{z1}$, $\varphi_{z2}$, $\varphi_{z3}$) des différents engrenages (Z1, Z2, Z3), des codeurs angulaires (D1, D2, D3) optiques, magnétiques et/ou électromagnétiques.

**3.** Dispositif de mesure selon la revendication 1 ou 2, pour lequel le nombre de dents (z1, z2, z3) des engrenages (Z1, Z2, Z3) se distingue de préférence d'une dent (dZ = 1), si bien que la différence (dZ) du nombre de dents (z1 - z2 ou z1 - z3) est respectivement égale à 1.

**4.** Dispositif de mesure selon l'une ou plusieurs des revendications précédentes, pour lequel l'unité de calcul (13) détermine la résolution multitour (TurnRes) en vue de la détermination de l'angle de rotation absolu à l'aide de la résolution partielle (TA), de la manière suivante :

$$TA = 1 / [(z_1{}^2 / (z_2 \cdot z_3)) - 1] \cdot 2$$

$$\text{TurnRes} = n \cdot TA$$

avec TurnRes, $n \in \mathbb{N}$, $TA \in \mathbb{Q}$ et TurnRes $\geq TA$, TurnRes étant la résolution multitour à n minimum.

5. Dispositif de mesure selon la revendication 1, 2 ou 3, pour lequel le codeur angulaire (D1) de l'engrenage (Z1, Z2, Z3), qui est attribué à l'arbre (8) de l'objet de mesure, mesure directement l'angle de rotation $\varphi_{z1}$ restant ou pour lequel l'unité de calcul (13) détermine l'angle de rotation $\varphi_{z1}$ restant au moyen des décimales lors du calcul des tours entiers (multitour), pour lequel l'équation suivante est de préférence utilisée :

$$\text{Turn} = \text{SumDiff} \cdot (TA/360°) + zHA \cdot TA$$

où $zHA \leq n$ et où SumDiff représente la somme des différences des angles de rotation $\varphi_{z1}$, $\varphi_{z2}$, $\varphi_{z3}$ des différents engrenages Z1, Z2, Z3

$$\text{SumDiff} = 2 \cdot \varphi_{z1} - \varphi_{z2} - \varphi_{z3}$$

6. Dispositif de mesure selon l'une ou plusieurs des revendications précédentes, pour lequel l'unité de calcul (13) divise la résolution angulaire (TurnRes) du dispositif de mesure (9) en sous-parties (UA) par la formation de la différence des angles de rotation ($\varphi_{z1}$, $\varphi_{z2}$, $\varphi_{z3}$) déterminés pour le deuxième engrenage (Z2) et pour le troisième engrenage (Z3), le nombre de sous-parties (UA) dépendant du nombre de dents ($z_1$) du premier engrenage (Z1) et le pas géométrique des sous-parties (UA, avec i = 1, ...n) étant supérieur au pas géométrique des parties principales (HA).

7. Dispositif de mesure selon l'une ou plusieurs des revendications précédentes, pour lequel l'unité de calcul (13) divise la résolution angulaire (TurnRes) du dispositif de mesure (1) en sous-parties (UA) par la formation de la différence ($\varphi_{z1} - \varphi_{z2} - \varphi_{z3}$) de l'angle de rotation déterminé du premier engrenage (Z1) et du deuxième engrenage (Z2) ou du premier engrenage (Z1) et du troisième engrenage (Z3), le pas géométrique des sous-parties (UA) étant supérieur au pas géométrique des parties principales (HA).

8. Dispositif de mesure selon l'une ou plusieurs des revendications précédentes, pour lequel l'unité de calcul (13) divise la résolution angulaire globale du dispositif de mesure (9) en n parties principales (HA) sur la base de la différence (dZ) du nombre de dents du premier engrenage (Z1) par rapport au deuxième engrenage (Z2) et du deuxième engrenage (Z2) par rapport au troisième engrenage (Z3), la différence étant égale à dZ, dZ étant supérieur ou égale à 1, et pour lequel l'unité de calcul (13) détermine la partie principale (HAn) correspondante au moyen de la position respective ($\varphi_{z1}$, $\varphi_{z2}$, $\varphi_{z3}$) des engrenages (Z1, Z2, Z3).

9. Dispositif de mesure selon l'une ou plusieurs des revendications 1 à 4, pour lequel il s'agit, concernant l'objet de mesure, d'un arbre d'entraînement (8) et/ou de l'arbre de sortie (7) d'un mécanisme (4) destiné à la commande d'un accessoire de tuyauterie (2), l'arbre d'entraînement (8) étant relié avec un élément de commande (3, 6), l'accessoire de tuyauterie (2) étant relié avec l'arbre de sortie (7), et pour lequel est prévu un engrenage réducteur (5) entre l'élément de commande (3, 6) et l'accessoire de tuyauterie (2).

10. Dispositif de mesure selon la revendication 9, pour lequel il s'agit, concernant de l'élément de commande, d'un moteur électrique (3) ou d'une roue de réglage (6).

11. Dispositif de mesure selon l'une ou plusieurs des revendications précédentes, pour lequel les engrenages (Z1, Z2, Z3) sont conçus en tant qu'engrenages cylindriques et/ou en tant qu'engrenages à denture intérieure et/ou en tant que courroie dentée et/ou en tant que roues dentées à chaîne et/ou en tant que roues de friction.

**Fig. 1**

$$Z_3 \neq Z_1 \neq Z_2 \qquad\qquad Z_1 \qquad\qquad Z_3 \neq Z_1 \neq Z_2$$

## Fig. 2

Fig. 3

EP 2 681 515 B1

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19821467 A1